Europäisches Patentamt

European Patent Office

Office européen des brevets

(11) Publication number: **0 186 487**
**B1**

## EUROPEAN PATENT SPECIFICATION

(45) Date of publication of patent specification: **05.07.89**

(21) Application number: **85309404.3**

(22) Date of filing: **23.12.85**

(51) Int. Cl.⁴: **G 21 F 5/00, G 21 C 19/40**

(54) Spent fuel storage cask having basked with grid assemblies.

(30) Priority: **24.12.84 US 686041**

(43) Date of publication of application:
**02.07.86 Bulletin 86/27**

(45) Publication of the grant of the patent:
**05.07.89 Bulletin 89/27**

(84) Designated Contracting States:
**BE FR GB IT SE**

(56) References cited:
**WO-A-80/02469**
**FR-A-2 258 692**
**FR-A-2 384 327**
**FR-A-2 480 984**

(73) Proprietor: **WESTINGHOUSE ELECTRIC CORPORATION**
**Westinghouse Building Gateway Center**
**Pittsburgh Pennsylvania 15235 (US)**

(72) Inventor: **Machado, Octavio Jorge**
**4435 Roxborough Drive**
**Pensacola Florida (US)**
Inventor: **Andrews, Ronnie Hurlbert**
**827 W Roberts Road**
**Cantonment Florida (US)**
Inventor: **Daugherty, David Anthony**
**4395 Creighton Road**
**Pensacola Florida (US)**
Inventor: **Efferding, Larry Edward**
**8680 Scenic Highway No. 6**
**Pensacola Florida (US)**

(74) Representative: **van Berlyn, Ronald Gilbert**
**23, Centre Heights**
**London, NW3 6JG (GB)**

Courier Press, Leamington Spa, England.

## Description

The present invention is related to the long-term storage of spent fuel that has been removed from a nuclear reactor, and more particularly, to a spent fuel storage cask having a basket which supports the spent fuel and which dissipates heat generated by the spent fuel. The basket includes a plurality of grid assemblies which provide storage slots for the spent fuel and which conduct heat to the walls of the cask.

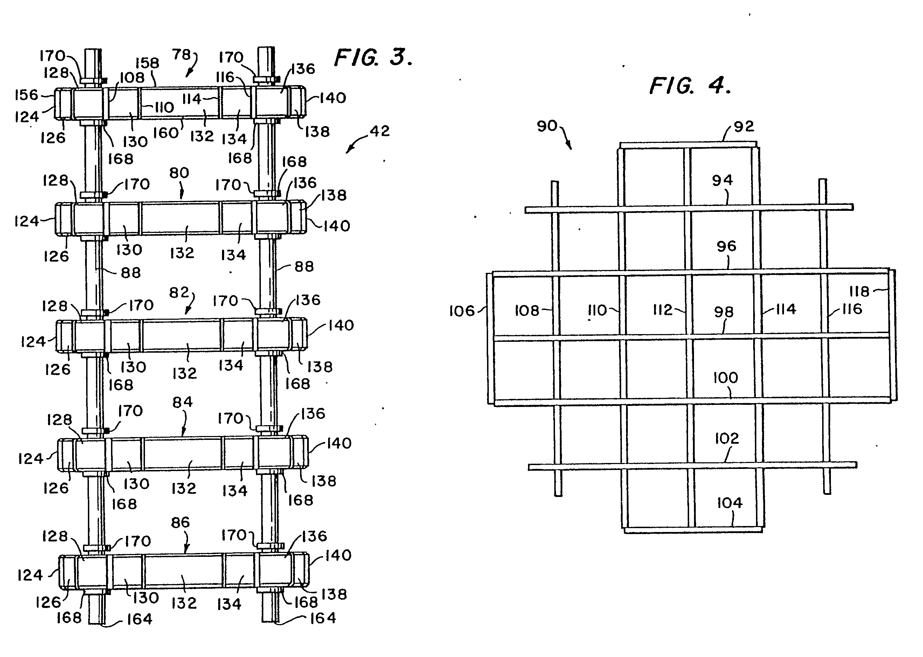

Figure 1 illustrates a typical fuel assembly 20 for supplying nuclear fuel to a reactor. Assembly 20 includes a bottom nozzle 22 and a top nozzle 24, between which are disposed elongated fuel rods 26. Each fuel rod 26 includes a cylindrical housing made of a zirconium alloy such as commercially available "Zircalloy-4", and is filled with pellets of fissionable fuel enriched with U-235. Within the assembly of fuel rods 26, tubular guides (not shown) are disposed between nozzles 22 and 24 to accommodate movably mounted control rods (not illustrated) and measuring instruments (not illustrated). The ends of these tubular guides are attached to nozzles 22 and 24 to form a skeletal support for fuel rods 26, which are not permanently attached to nozzles 22 and 24. Grid members 28 have apertures through which fuel rods 26 and the tubular guides extend to bundle these elements together. Commercially available fuel assemblies for pressurized water reactors include between 179 and 264 fuel rods, depending upon the particular design. A typical fuel assembly is about 4.1 meters long, about 19.7 cm wide, and has a mass of about 585 kg, but it will be understood that the precise dimensions vary from one fuel assembly design to another.

After a service life of about 3 years in a pressurized water reactor, the U-235 enrichment of a fuel assembly 20 is depleted. Furthermore, a variety of fission products, having various half-lives, are present in rods 26. These fission products generate intense radiation and heat when assemblies 20 are removed from the reactor, and accordingly the assemblies 20 are moved to a pool 30 (Fig. 2) of borated water for short-term storage.

Pool 30 is typically 12.2 meters deep. A number of spent fuel racks 32 positioned at the bottom of pool 30 are provided with storage slots 34 to vertically accommodate fuel assemblies 20. A cask pad 36 is located at the bottom of pool 30.

During the period when fuel assemblies 20 are stored in pool 30, the composition of the spent fuel in rods 26 changes. Isotopes with short half-lives decay, and consequently the proportion of fission products having relatively long half-lives increases. Accordingly, the level of radioactivity and heat generated by a fuel assembly 20 decreases relatively rapidly for a period and eventually reaches a state wherein the heat and radioactivity decrease very slowly. Even at this reduced level, however, rods 26 must be reliably isolated from the environment for the indefinite future.

Dry storage casks provide one form of long-term storage for the spent fuel. After the heat generated by each fuel assembly 20 falls to a predetermined amount — such as 0.5 to 1.0 kilowatt per assembly, after perhaps 10 years of storage in pool 30 — an opened cask is lowered to pad 36. By remote control the spent fuel is transferred to the cask, which is then sealed and drained of borated water. The cask can then be removed from pool 30 and transported to an above-ground storage area for long-term storage.

The requirements which must be imposed on such a cask are rather severe. The cask must be immune from chemical attack during long-term storage. Furthermore, it must be sufficiently rugged mechanically to avoid even tiny ruptures or fractures during long-term storage and during transportation, when the cask might be subjected to rough treatment or accidents such as drops. Moreover, the cask must be able to transmit heat generated by the spent fuel to the environment while nevertheless shielding the environment from radiation generated by the spent fuel. The temperature of the rods 26 must be kept below a maximum temperature, such as 375°C, to prevent deterioration of the zirconium alloy housing. Provisions must also be made to ensure that a chain reaction cannot be sustained within the cask; that is, that the effective criticality factor $K_{eff}$ remains less than one so that a self-sustaining reaction does not occur. These requirements impose stringent demands upon the cask, which must fulfill its storage function in an utterly reliable manner.

Accordingly, it is the principal object of the present invention to provide a mechanically rugged storage cask which prevents fission products and radiation from escaping into the environment while dissipating heat generated by spent fuel.

With this object in view, the present invention resides in a cask for long-term storage of spent nuclear fuel, comprising a container having a cavity therein and including a top portion, a bottom portion defining a floor and side walls extending between the top and bottom portions; and a plurality of disk-shaped grid assemblies having a periphery, and means coaxially mounting said grid assemblies within said cavity at space-apart positions so that their peripheries are adjacent said side walls, each grid assembly comprising a plurality of plates connected to one another to form a matrix having rectangular apertures, the apertures of said grid assemblies being aligned to provide said storage slots, characterized in that a plurality of block elements are affixed to said matrix of plates to form said periphery and adapted to expand into pressing contact with said side walls during storage of the spent nuclear fuel in order to facilitate the transfer of heat from said grid assemblies to said side walls. When the cask elements are fabricated at normal shop temperatures, the diameters of the grid assemblies are slightly less than the diameter of the inner cask wall, so that the basket can be inserted into the container. When spent fuel is loaded and stored, however, the temperature

within the cask rises and the grid assemblies expand with respect to the container so that the peripheries of the grid assemblies come into heat-conducting contact with the container walls.

In accordance with one aspect of the invention, the container walls include vertically spaced rings which project slightly into the cavity. Each ring corresponds to a grid assembly and is positioned adjacent the periphery of the corresponding grid assembly. At the time of fabrication the diameter of a ring is slightly (e.g., about 0.3 cm) greater than the diameter of the corresponding grid assembly, and in order to alleviate the risk that the basket might jam while it is being inserted into the container, the diameter of each grid assembly and the diameter and of its corresponding ring are slightly less than the diameters of the grid assembly and ring above it. The changing diameters not only afford a greater latitude for error during the initial stages of insertion, they also provide visual guides for correcting the alignment as the insertion process progresses.

In accordance with another aspect of the invention, the basket includes legs to which the grid assemblies are mounted at spaced-apart positions. Four of the metal elements of each grid assembly are provided with holes through which the legs extend. The grid assemblies are confined between top and bottom rings affixed to the legs on either side of the holes. The distance between the rings is slightly greater than the thickness of the grid assemblies in order to permit differential expansion of the elements as the temperature within the cask rises.

In accordance with another aspect of the invention, open-ended cells for enclosing fuel assemblies can be inserted into the storage slots of the basket. Each cell has four walls which have dimensions corresponding to those of the fuel assembly to be enclosed and which support "neutron poison". The cells are positioned in the storage slots by heat-conducting wedges which are welded to the plates of the grid assemblies and which are spaced apart slightly from two of the cell walls. This slight spacing allows differential expansion of the cells with respect to the basket but permits transfer of heat to the basket, particularly if the cask is flooded with helium.

In accordance with yet another aspect of the invention, the rings on the container wall are wider than the thicknesses of the corresponding grid assemblies, and moreover beveled surfaces are provided on both the rings and the peripheries of the grid assemblies in order to facilitate insertion and/or removal of the basket.

The invention will become more readily apparent from the following description of preferred embodiments thereof shown, by way of example only, in the accompanying drawings, wherein:

Figure 1 is a perspective view of a typical fuel assembly;

Figure 2 is a top plan view of a pool for short-term storage of spent fuel assemblies;

Figure 3 is a front elevational view of a basket, and illustrates grid assemblies which are mounted at spaced-apart positions on legs;

Figure 4 is a top plan view of plates connected to provide a matrix of apertures for a grid assembly;

Figure 5 is an exploded perspective view illustrating how two of the plates of Figure 4 are connected in order to provide the matrix;

Figure 6 is a vertical sectional view of a container, and illustrates rings which form part of the inner wall of the container and which project slightly into the interior thereof;

Figure 7 is a top plan view of the matrix of Figure 4 and metal blocks which are attached thereto to provide a roughly circular periphery;

Figure 8 is a top plan view of a completed grid assembly after its periphery has been machined into a circular shape and holes have been drilled to accommodate legs;

Figure 9 is a sectional view illustrating the periphery of a grid assembly pressed against its corresponding ring;

Figure 10 is a sectional view of a cell for receiving a spent fuel assembly;

Figure 11 is a perspective view of the cell of Figure 10;

Figure 12 is a front elevational view of a basket with cells affixed therein;

Figure 13 is a top plan view schematically illustrating a cell which is positioned by heat conducting wedges affixed to a grid assembly;

Figure 14 is a sectional view taken along the line 14-14 in Figure 13; and

Figure 15 is a sectional view, taken along a plane perpendicular to the paper of Figure 6, of a cask which includes a container with a basket having cells mounted therein.

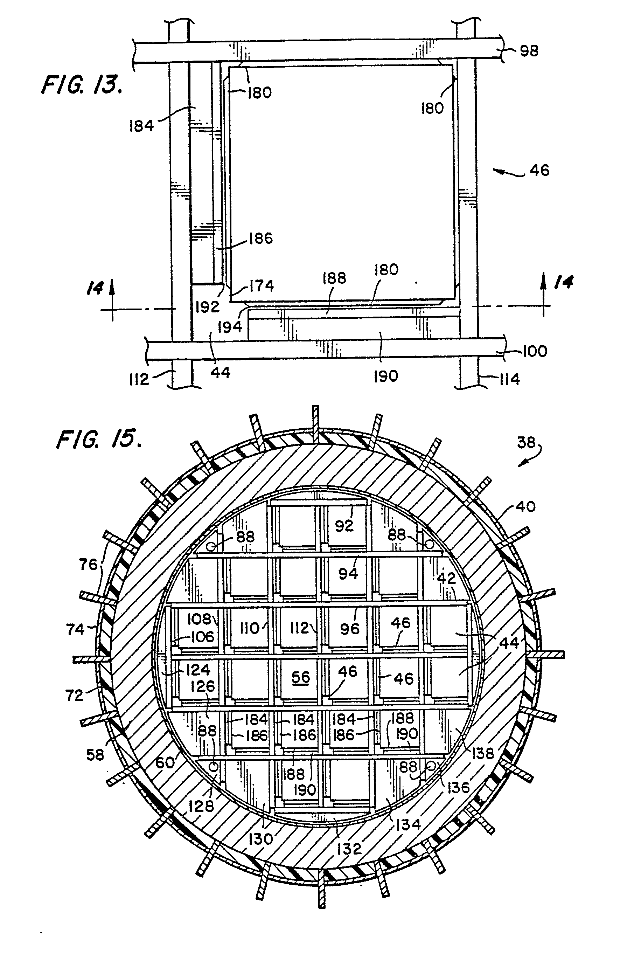

With initial reference to Figure 15, the cask 38 of the present invention includes a generally cylindrical container 40 having a basket 42 disposed therein. Basket 42 provides an array of storage slots 44, configured much a matrix of vertically disposed pigeon holes, each accommodating a cell 46 for a spent fuel assembly 20 or a canister for consolidated fuel. As will be discussed in detail subsequently, container 40 and basket 42 are fabricated separately, whereupon basket 42 is inserted into container 40 to provide cask 38.

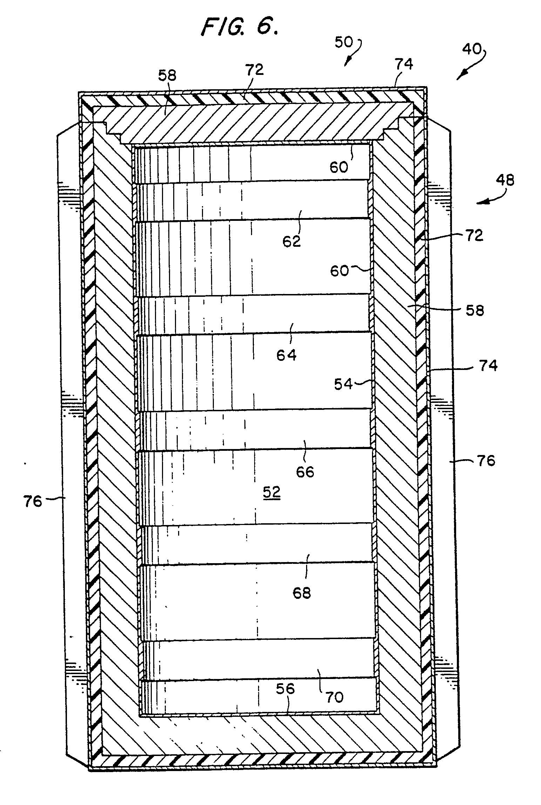

Turning next to Figure 6, container 40 includes a base element 48 having an upper proportion configured to receive a lid element 50. The cavity 52 provided within element 48 has substantially cylindrical interior walls 54 rising from floor 56, which is substantially horizontal during long-term storage. Elements 48 and 50 include carbon steel portions 58 to which inner cladding layers 60 of stainless steel are affixed. Carbon steel portions 58 are approximately 30 cm thick and served to protect the environment from gamma rays. Layer 60 can be applied to base element 48, for example, by placing element 48 on a turntable and rotating it while welding a continuous spiral path around the interior using stainless steel welding rods, thereby applying a stainless steel surface which completely covers floor 56 and interior walls 54 of element 48. During this cladding operation, excess stainless steel is applied to provide rings 62, 64, 66, 68 and 70, which project slightly into the interior of element 48 for reasons which will be discussed subsequently. After rings 62-70 have been deposited they are machined to provide smooth, cylindrical surfaces.

With continuing reference to Figure 6, carbon steel portions 58 of elements 48 and 50 are surrounded with a layer about 7.6 cm thick of neutron absorbing material 72, which may be a resin. A suitable resin for use as material 72 is commercially available from BISCO Products, Inc., 1420 Renaissance Drive, Park Ridge, Illinois 60068, under Stock Number N.S.-3. Surrounding material 72 is outer layer 74 of stainless to protect container 40 from the environment. Container 40 also includes cooling fins 76 of carbon steel, preferably treated to protect the carbon steel from chemical attack by the environment. Fins 76 are welded to portion 58 and extend through material 72 and layer 74. In this embodiment container 40 is approximately 4.8 meters high and has an outer diameter of about 2.5 meters, excluding fins 76, and an inner diameter of approximately 1.7 meters. When loaded with spent fuel, cask 38 has a mass of over 100,000 kilograms. Although not illustrated, it is advantageous to affix a pair of trunions at the top and bottom of base element 48 in order to facilitate handling.

Turning next to Figure 3, basket 42 includes grid assemblies 78, 80, 82, 84 and 86, which are supported in a column by legs 88. Grid assemblies 78-86 are substantially identical, except that their diameters differ slightly for reasons to be discussed subsequently.

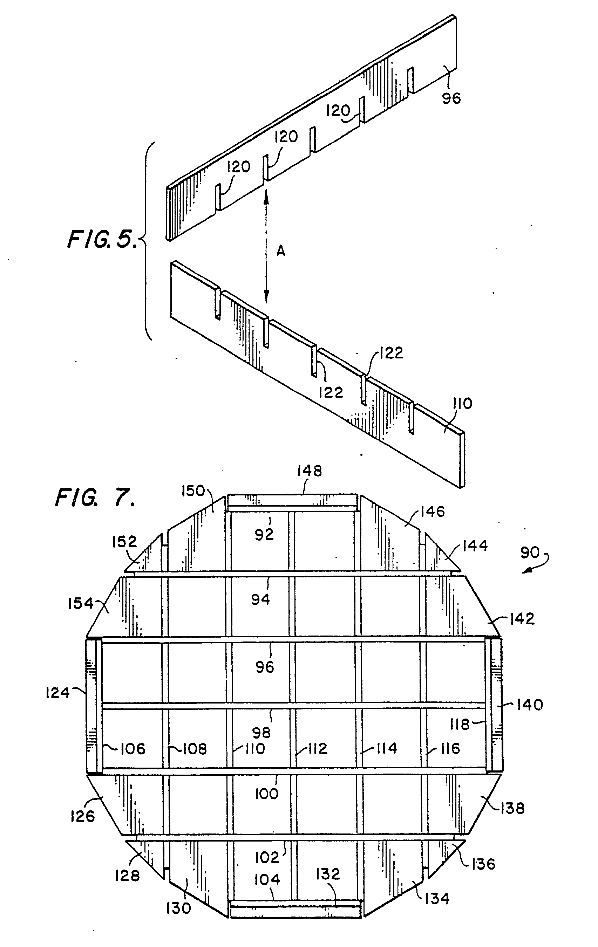

Referring next to both Figures 4 and 5, the construction of a grid assembly will now be described. Matrix 90 includes plates 92, 94, 96, 98, 100, 102, 104, 106, 108, 110, 112, 114, 116 and 118. These plates are approximately 23 cm high and 2.0 cm thick. The bottom portion of plate 96, for example, includes 5 downwardly orientated slots 120 which extends midway into the plate and which divide the plate into six segments. Similarly, plate 110, for example, has 5 upwardly oriented slots 122. The slots 120 in plate 96 and the slots 122 in plate 110 are about 26.3 cm apart, and it will be apparent that such dimensions provide storage slots 44 which are positioned about 26.3 cm apart, center-to-center. During assembly, plates 94, 96, 98, 100 and 102 are held at right angles to plates 108, 110, 112, 114 and 116, and the slots 120 are then inserted into slots 122, in the manner illustrated by Arrow A, to provide intersections which extend from the tops of the plates to the bottoms. Thereafter the plates are joined by full length fillet welds running along opposite sides of the intersections, so that each intersection is provided with two welds. Fabrication of matrix 90 is completed by welding plates 92 and 104 to the ends of plates 110, 112 and 114 and by welding plates 106 and 118 to the ends of plates 96, 98 and 100.

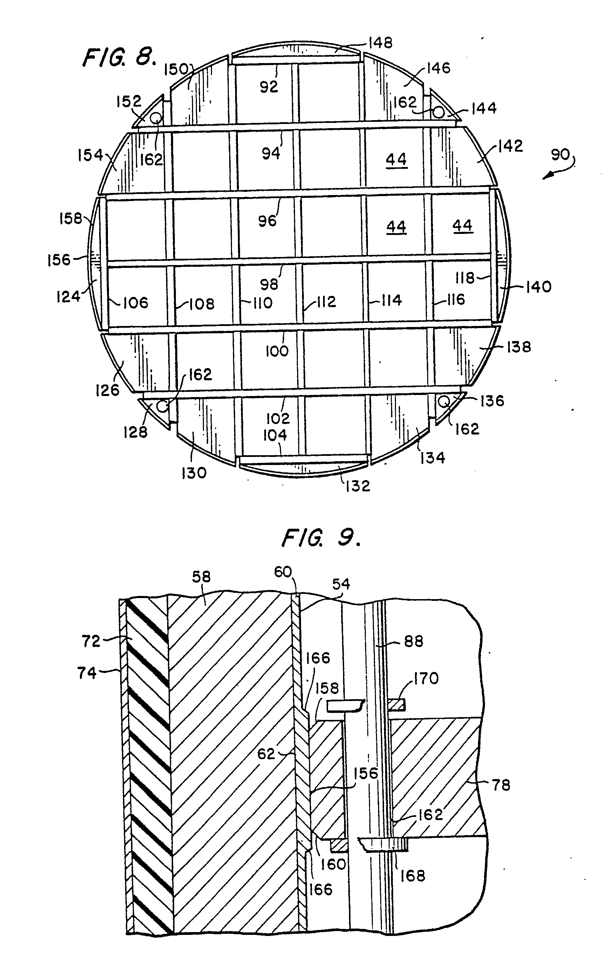

Turning next to Figure 7, after matrix 90 is fabricated blocks 124-154 are welded to plates 92-118 to provide matrix 90 with an approximately circular metallic periphery. Matrix 90, with blocks 124-154 attached thereto, is then mounted on a turntable and machined to provide a circular periphery 156 having a top bevel 158 and a bottom bevel 160. Fabrication of the grid assembly is completed by drilling holes 162 through blocks 128, 136, 144 and 152 in order to slidingly accommodate legs 88. It will be apparent that the construction described above provides generally disk-shaped grid assemblies having plates which define twenty four square apertures and having peripheries which are in heat-conducting contact with the plates.

With reference next to both Figures 3 and 6, the grid assemblies 78-86 of basket 42 are positioned on legs 88 so that they will be level with respective rings 62-70 on wall 54 when the bottoms 164 of legs 88 contact floor 56 of container 40. That is to say, the top grid assembly 78 corresponds to top ring 62 and is supported on legs 88 at a position which aligns the periphery 156 of grid assembly 78 with ring 62 when basket 42 is inserted into container 42. This alignment is illustrated in Figure 9, wherein it will be noted the rings are provided with bevels 166. Similarly, the second grid assembly 80 corresponds to the second ring 64 and is supported on legs 88 at a position which aligns the periphery 156 of grid assembly 80 with ring 64 when basket 42 is inserted into container 40; the third grid assembly 82 corresponds to the third ring 66 and is supported on legs 88 at a position which aligns the periphery 156 of grid assembly 82 with ring 66 when basket 42 is inserted into container 40; the fourth grid assembly 84 corresponds to the fourth ring 68 and is supported on legs 88 at a position which aligns the periphery 156 of grid assembly 84 with ring 68 when basket 42 is inserted into container 40; and, finally, the bottom grid assembly 86 corresponds to bottom ring 70 and is supported on legs 88 at a position which aligns the periphery 156 of grid assembly 86 with ring 70 when basket 42 is inserted into container 40.

With continuing reference to Figure 3, grid assemblies 78-86 are supported on legs 88 by bottom rings 168, which are affixed to legs 88. For reasons to be discussed subsequently, top rings 170 are affixed to legs 88 at positions spaced slightly above the upper surfaces of grid assemblies 78-86, the distances between rings 170 and the upper surfaces of the grid assemblies in Figure 3 being exaggerated for purposes of illustration. It will be apparent that the grid assemblies are confined between their respective bottom and top rings 168 and 170, but each grid assembly is able to move with respect to legs 88 by a distance which is equal to the difference between the thickness of the grid assembly and the spacing between rings 168 and 170.

After assembly of basket 42, it is mounted on a turntable and the peripheries 156 of grid assemblies 78-86 are machined again to ensure that slight manufacturing deviations have not resulted in peripheries that are eccentric with respect to one another. Moreover, the peripheries 156 are machined to slightly different diameters, the diameters decreasing from the top grid assembly 78 of basket 42 to the bottom grid assembly 86. In the preferred embodiment the diameter of grid assembly 78 is approximately 169.875 cm; the diameter of grid assembly 80 is .635 cm less than the diameter of grid assembly 78; the diameter of grid assembly 82 is .635 cm less than the diameter of grid assembly 80; the diameter of grid assembly 84 is.635 cm less than the diameter of grid assembly 82; and the diameter of grid assembly 86 is .635 cm less than the diameter of grid assembly 84. Accordingly, it will be apparent that the peripheries 156 of grid assemblies 78-86 define concentric cylinders which have diameters progressively differing by .635 cm, and that the diameter of top grid assembly 178 is approximately 2.54 cm greater than the diameter of bottom grid assembly 86.

The plates 92-118, blocks 124-154, and rings 168 and 170 of the basket 42 are made of a metal which conducts heat. In the preferred embodiment aluminum is used for basket 42, although other metals such as copper would also be suitable.

The storage slots 44 provided by basket 42 can be used for storing fuel assemblies 20 or for storing spent fuel in consolidated form, or both simultaneously. In such consolidated storage, the rods 26 are removed from the fuel assemblies 20 and placed in a consolidation canister which holds a greater number of fuel rods than the number in a single fuel assembly. In order to prepare cask 38 for consolidated storage, assembly 42 is inserted into container 40, as will be described subsequently, and consolidation canisters loaded with spent fuel are transferred under water to storage slots 44. If one or more storage slots 44 are to be devoted to the storage of fuel assemblies 20, however, these storage slots are provided with cells for receiving the fuel assemblies 26 before assembly 42 is inserted into container 40.

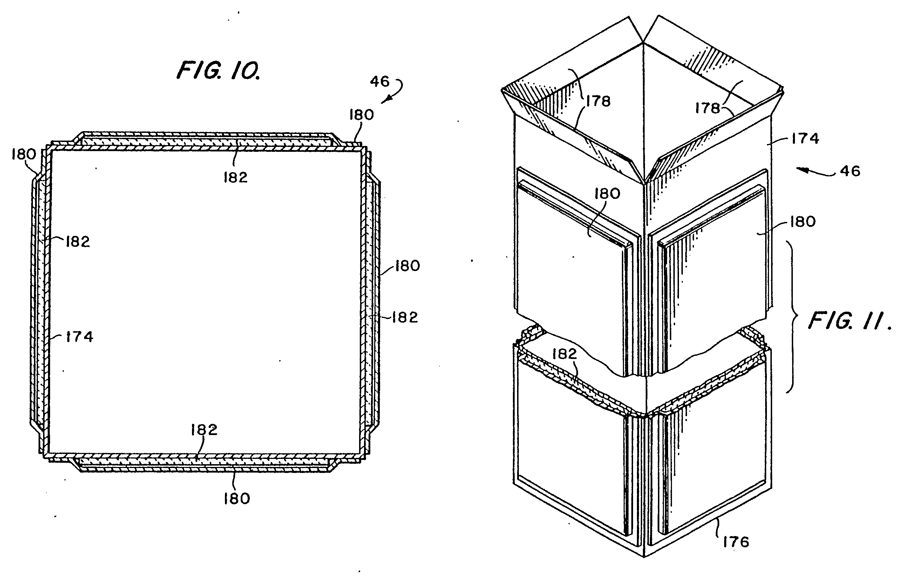

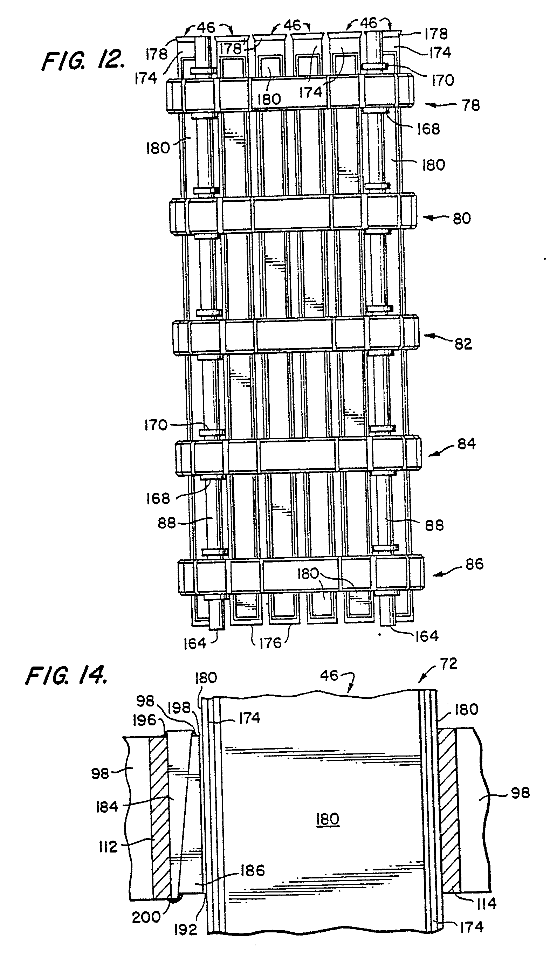

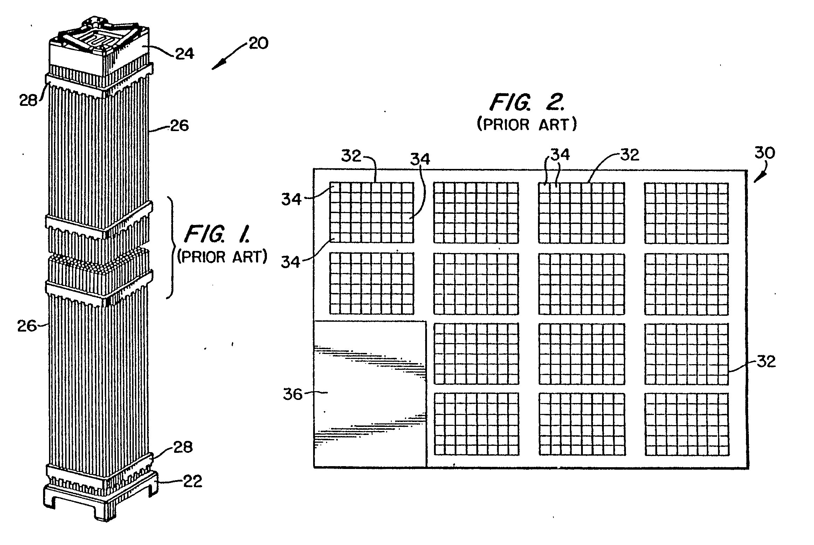

Turning next to Figures 10 and 11, a cell 46 will now be described. Shell element 174, of stainless steel about .19 cm thick, has four elongated sides defining a region having a square cross section sufficiently large to accommodate a fuel assembly 20. The cross sectional area is determined by the dimensions of the particular fuel assembly design, so as to provide a snug fit. The bottom end of 176 of element 174 is open and the top end of element 174 is provided with outwardly bent flanges 178 which serve to funnel the fuel assembly 20 into cell 46. Stainless steel wrapper portions 180, about .08 cm thick, are welded to shell element 174 in order to support sheets 182 of a "neutron poison" such as boron carbide. Sheets 182, which are about [.19] cm thick, are present to moderate neutrons emitted from fuel assemblies 20 when cask 38 is in pool 30 while the fuel assemblies are being loaded into it.

That is to say, sheets 182 serve to maintain the criticality factor $K_{eff}$ at less than one in order to obviate the possibility of a self-sustaining chain reaction while cask 38 contains both water and fuel assemblies 20. Sheets 182 limit the nuclear interaction between fuel assemblies which are, of course, designed to promote chain reactions when they are present in a reactor. In fact, neutron poison is unnecessary when consolidated fuel is stored. It is worth noting that sheets 182 have served their purposes after the water has been drained from cask 38 during the loading process, since water thermalizes neutrons and, after drainage, the potential for a chain reaction is reduced.

Turning next to Figures 12, 13 and 14, the mounting of cells 46 in the storage slots 44 provided by basket 42 will now be described. Each cell 46 is fastened, for example by welding, to the bottom grid assembly 86. The bottom ends 176 of cells 172 are disposed slightly above the bottoms 164 of legs 88 in order to facilitate water drainage. The cells 46 are not fixedly attached to the remaining grid assemblies 78, 80, 82, and 84, since otherwise differential expansion of the cells 46 with respect to basket 42, as the temperature within cask 38 rises following drainage of the water, would create appreciable strains in the structure which might lead to unacceptable performance. Instead of fastening cells 46 to grid assemblies 78-84, heat conducting wedges are used to position the cells within grid assemblies 78-84 while nevertheless permitting the cells to move axially with respect to the grid assemblies. In order to avoid an electrolytic reaction the wedges are preferably made of the same metal, such as aluminum or copper, as the plates 92-118 of grid assemblies 78-84. For example Figure 13 illustrates a top view of a portion of grid assembly 78 and a cell 46, illustrated for the sake of clarity without its flanges 178. In Figure 13 it will be apparent that one side of the cell 46 slidably rests against plate 98 and another side slidably rests against plate 114. The other sides of the cell 46 receive lateral support by means of wedges 184, 186, 188, and 190, with a narrow gap 192 being left between wedge 186 and cell 46 and with a narrow gap 194 being left between wedge 188 and cell 46. Gaps 192 and 194 are exaggerated in Figure 13 for purposes of illustration.

The installation of wedges 184 and 186, for example, is illustrated in Figure 14. After cell 46 is inserted into the storage slot 44, wedge 184 is affixed to plate 112 by fillet weld 196. Wedge 186 is then inserted and, using a feeler gauge, gap 192 is adjusted to provide a predetermined spacing between wedge 186 and cell 46 when cask 38 reaches its maximum temperature, such as 375°C, during storage of spent fuel. This predetermined gap thickness preferably ranges from about .005 cm to .025 cm. After the gap adjustment, wedge 186 is affixed to wedge 184 by fillet weld 198, and weld 200 is applied to join plate 112, wedge 184, and wedge 186. In the same way, wedges 188 and 190 are adjusted and welded to provide gap 194, preferably also ranging from .OO5 cm to .025 cm wide. The remaining cells 46 are, of course, wedged into the apertures provided by grid assembly 78, and into the apertures provided by grid assemblies 80, 82, and 84, in the same manner.

After cask 38 is loaded with fuel assemblies 20 and drained of water it is preferably flooded with an inert gas, such as helium or nitrogen, although air may be employed instead. Helium, in particular, readily transmits heat through narrow gaps such as gaps 192 and 194. Accordingly, it will be apparent that heat from a cell 46 is directly transmitted to the plates of a grid assembly via the two sides of the cell which contact the plates, and indirectly via gaps 192 and 194 and wedges 184-190 to the remaining plates. Gaps 192 and 194 are sufficiently narrow to prevent cells 46 from rattling around within basket 42 during manufacture, loading, and transportation of cask 38 to a remote storage location. Gaps 192 and 194 also, as indicated previously, serve to permit linear movement of cells 46 with respect to basket 42 during temperature changes. This differential linear expansion of cells 46 with respect to basket 42 can amount to 2 centimeters or more within the range of temperatures encountered during and after the insertion of fuel assemblies into cells 46. Moreover, wedges 184-190 position cells 46 within assembly 42 and ensure a cell-center to cell-center spacing, in the present embodiment, of about 26.2 cm. This uniform spacing, in addition to poison sheets 82, ensures that the credicality factors $K_{eff}$ remains less than 1 before the water is drained from cask 38.

From the previous discussion it will be recalled that the top grid assembly 78 has a diameter of 169.875 cm in the preferred embodiment, and that the remaining grid assemblies 80-86 have decreasing diameters. Rings 62-70 in container 40 are also machined to have different diameters. In the preferred embodiment top ring 62 has a diameter of approximately 170.18 cm, that is, approximately .305 cm greater than the diameter of grid assembly 78. The diameter of ring 64 is .635 cm less than the diameter of ring 62; the diameter of ring 66 is .635 cm less than the diameter of ring 64; the diameter of ring 68 is .635 cm less than the diameter of rings 66; and the diameter is reduced by .635 cm again for bottom ring 70. Thus, rings 62-70, like the peripheries 156 of grid assembly 78-86, defined concentric cylinders having a common axis and diameters differing by .635 cm. Moreover, the diameter of each ring 62-70 is, when container 40 and basket 42 are being fabricated at normal shop temperatures, .305 cm greater than the diameter of the corresponding grid assembly 78-86.

The stepped diameters of grid assemblies 78-86 and rings 62-72 facilitate insertion of basket 42, after cells 46 had been wedged into place in the manner previously described, into container 40. Assembly 42 and the cells 46 are relatively massive and the fit between assembly 42 and container 40 is relatively tight, so that a slight axial misalignment between container 40 and assembly 42, or a slight longitudinal displacement of container 40 with respect to assembly 42, might cause assembly 42 to jam, or become lodged within container 40 before it is fully inserted, were it not for the stepped diameters. During the initial stages of the insertion operation, as assembly 42 and the cells 46 mounted therein are suspended over container 40 and are being lowered into it, the difference in the diameters of grid assembly 86 and ring 62 provides over 1.5 cm clearance as assembly 86 passes ring 62. This clearance can be visually checked and any misalignment can be corrected. When basket 42 is lowered further into container 40, there is about 1.22 cm clearance between grid assembly 86 and ring 64 and between grid assembly 84 and ring 62. These clearances can be visually checked again, and any asymmetries corrected. Due to the stepped diameters it is not until grid assembly 86 is lowered to ring 70 that the diametrical differences become .305 cm. Thus, the stepped diameters of ring 62-70 and of grid assemblies 78-86 not only facilitate monitoring of the insertion process, they also effectively multiply the tolerance for inaccuracy throughout most of the insertion process. It should also be noted that bevels 158 and 160 of grid assemblies 78-86 and bevels 166 of rings 62-70 also reduce the likelihood that basket 42 will jam within container 40 when basket 42 is being inserted or removed. Such removal might be necessary, for example, should basket 42 lodge in container 40 before it is fully inserted. Figure 15 illustrates cask 38 after basket 42 with cells 172 is fully installed in container 40.

An operational summary of cask 38 can now be presented. Cask 38 is opened and lowered to cask pad 36 of pool 30, and fuel assemblies 20 are transferred to cells 46. After lid element 50 is bolted into place, gas is introduced into cask 38 as water is being drained. The temperature within cask 38 rises as the water is drained, so that a long drying time is not necessary. As the temperature within cask 38 rises, grid assemblies 78-86 expand radially and the .305 cm diameter difference between grid assemblies 78-86 and their respective rings 62-70 disappears as result of differential expansion between assembly 42 and container 40. The peripheries 156 of grid assemblies 78-86 are pressed against their respective rings 62-70 to provide heat flow paths between assembly 42 and container 40. For example, Figure 9 illustrates grid assembly 78 pressed against its corresponding ring 62 when the interior of cask 38 reaches its equilibrium temperature. It should be noted that this differential expansion of grid assemblies 78-86 into contact with their corresponding rings 62-70 is a self-correcting feature. Consider, for example, the situation if the equilibrium temperature were to change during spent fuel storage so as to separate the grid assemblies 78-86 from their respective rings 62-70. Such a separation would impede heat transfer from grid assembly 78-86 to rings 62-70, and thence to the environment. This in turn would raise the temperature of grid assemblies 78-86, pressing them again against their corresponding rings 62-70 so as to reestablish the heatconducting relationship at a new equilibrium temperature.

At thermal equilibrium grid assemblies 78-86 interfere with rings 62-70 in the sense that their diameters would overlap were they not pressing against each other. This condition may be deemed "diametral interference" and results in stress where the peripheries 156 of grid assemblies 78-86 contact the surfaces of rings 62-70. With the cask dimensions given, and assuming that the difference in diameters of grid assemblies 78-86 with respect to rings 62-70 is initially .305 cm, with a manufacturing tolerance of plus or minus .038 cm, at thermal equilibrium the diametral interference ranges from about .0305 cm to about .107 cm when cask 38 contains 24 spent fuel assemblies 20, each generating a kilowatt of heat. The resulting stress ranges from about 1,000-4,000 PSI (69 million—276 million dynes/cm$^2$). It has been determined experimentally that the contact temperature differences between stainless steel and aluminum at these pressures range from approximately 0°C to 1.7°C.

Cask 38 could be modified by replacing rings 62-70 with vertically disposed tracks affixed to walls 54 and by affixing corresponding tracks at the periphery of basket 42. The tracks would preferably be tapered to facilitate insertion. However, the use of vertical tracks rather than horizontal rings would tend to complicate manufacture.

Another alternative would be to manufacture basket 42 so that the diameters of grid assemblies 78-86 are the same as or slightly larger than the diameters of rings 62-70. Under this alternative container 40 would be heated and/or basket 42 would be chilled, as by frozen $CO_2$, prior to the insertion operation. Basket 42 would then be tightly fitted to container 40 when the elements are returned to normal shop temperature. This alternative would exclude borated water from the interface between grid assemblies 78-86 and rings 62-70, thus ensuring that contaminants do not enter this interface to degrade heat flow.

From the foregoing discussion it will be apparent that the spent fuel storage cask of the present invention provides a basket formed of grid assemblies which define storage slots for receiving spent fuel and which, after the basket is inserted into the container, expand to provide heat-conducting interfaces between the grid assemblies and the walls of the container. Although the foregoing discussion has described the preferred embodiments with reference to pressurized water reactors, in which case the water in pool 30 would be borated, it will be apparent to those skilled in the art that the present invention could be used with spent fuel from a boiling water reactor.

It will be understood that the above description of the present invention is susceptible to various modifications, changes, and adaptations, and the same are intended to be comprehended within the meaning and range of equivalence of the appended claims.

## Claims

1. A cask for long-term storage of spent nuclear fuel, comprising a container (40) having a cavity (52) therein and including a top portion, a bottom portion defining a floor (56) and side walls (54) extending between the top and bottom portions; and a plurality of disk-shaped grid assemblies (78, 80, 82, 84, 86) having a periphery (56), and means (88, 162, 168, 170) coaxially mounting said grid assemblies within said cavity at spaced-apart positions so that their peripheries are adjacent said side walls, each grid assembly comprising a plurality of plates (92-118) connected to one another to form a matrix (90) having rectangular apertures, the apertures of said grid assemblies being aligned to provide storage slots, characterized in that a plurality of block elements (124-154) are affixed to said matrix (90) of plates to form said periphery and adapted to expand into pressing contact with said side walls during storage of the spent nuclear fuel in order to facilitate the transfer of heat from said grid assemblies (78, 80, 82, 84, 86) to said side walls.

2. A cask according to claim 1, characterized in that said grid assemblies have aligned holes (162) therein, and legs (88) extend through said holes and, for each grid assembly a bottom ring (168) is affixed to the leg at one side of the grid assembly and a top ring (170) is affixed to the leg on the other side of the grid assembly, the distance between said top and bottom rings being greater than the thickness of the length of said hole through said grid assembly so that said grid assembly is slidably confined between said top and bottom rings.

3. A cask according to claim 2, characterized in that four-sided cells (172), each side having a sheet (182) of neutron poison material affixed thereto are disposed in said storage slots, and that heat conducting means (184, 186, 188, 190) are affixed to said plates for positioning said cells in said storage slots.

4. A cask of claim 3, characterized in that for each cell said heat conducting means comprises wedges (184, 186, 188, 190) disposed adjacent two walls of the cell and spaced apart from the walls of the cell.

5. A cask of claim 4, characterized in that said wedges are spaced apart from said cell wall so as to provide gaps ranging from .005 cm to .025 cm.

6. A cask according to any of claims 1 to 5, characterized in that said cask is flooded with an inert gas such as helium.

7. A cask according to any of claims 1 to 6, characterized in that said side walls have rings (62, 64, 66, 68, 70) projecting into said cavity, adjacent the periphery of the grid assemblies.

8. A cask according to claim 7, characterized in that the diameters of said grid assemblies and said rings decrease with increasing distance from the top portion of said container.

9. A cask of claim 8, characterized in that the difference in the diameters of adjacent grid assemblies and rings is approximately 0.6 cm and at the predetermined temperature the diameter of each grid assembly is less than the diameter of its corresponding ring by approximately 0.3 cm.

10. A cask according to claim 7, 8 or 9, characterized in that the width of each ring is greater than the thickness of the corresponding grid assembly and said rings and grid assemblies have beveled edges (158, 160, 166).

**Patentansprüche**

1. Behälter für die Lang-Zeit Lagerung von verbrauchten Kernbrennstoff mit einem einen Hohlraum (52) umschliessenden Gefäss (40), das einen Oberteil und einen mit einem Boden (56) versehenen Unterteil und zwischen dem Ober- und Unterteil sich erstreckenden Seitenwände (54) aufweist, wobei eine Anzahl von Gitteranordnungen (78, 80, 82, 84, 86) an ihrem Umfang (56) mit Haltenmitteln (88, 162, 168, 170) co-axial in Abständen voneinander an den Seitenwänden (54) befestigt sind und jede der Gitteranordnungen eine Vielzahl von so miteinander verbundenen Platten (92-118) aufweist, dass eine Matrix mit rechteckigen Öffnungen gebildet wird, die so miteinander ausgerichtet sind dass si Lager-Fächer bilden, dadurch gekennzeichnet, dass eine Vielzahl von Block-Elementen (124-154) an den Matrix-Platten umfänglich so angebracht sind, dass sie sich unter Wärmeausdehnung während der Einlagerung von verbrauchtem Brennstoff fest an die Seitenwände anlegen und damit die Wärmeübertragung von den Gitteranordnungen (78, 80, 82, 84, 86) auf die Seitenwände erleichtern.

2. Behälter nach Anspruch 1, dadurch gekennzeichnet, dass die Gitteranordnungen linear ausgerichtete Bohrungen (162) aufweisen und stützstäbe (88) durch die Bohrungen (162) hindurchgreifen, und dass bei jeder Gitteranordnung ein unterer und ein oberer Haltering (168, 170) unterhalb und oberhalb der Gitteranordnung am Stützstab (88) befestigt ist, wobei der Abstand zwischen den Halteringen (168, 170) grösser als die Dicke der Gitteranordnung ist, so dass die Gitteranordnung leicht verschiebbar zwischen den oberen und unteren Halteringen festgelegt ist.

3. Behälter nach Anspruch 2, dadurch gekennzeichnet, dass vier-seitige Lagerzellen (172) mit auf allen Seiten angebrachten Platten (182) aus Neutronen absorbierenden Material in den Lager-Fächern angeordnet sind, und dass Wärme leitende Mittel (184, 186, 188, 190) an den Platten so angebracht sind, dass sie das Einschieben der Lagerzellen in die Lager-Fächer erleichtern.

4. Behälter nach Anspruch 3, dadurch gekennzeichnet, dass die Wärme leitende Mittel aus an den Zellwänden mit Abstand angebrachten Keilstücken (184, 186, 188, 190) bestehen.

5. Behälter nach Anspruch 4, dadurch gekennzeichnet, dass die Keilstücke mit einem Abstand von 0.005 cm bis 0.025 cm von der Zellwand angebracht ist.

6. Behälter nach einem der Ansprüche 1 bis 5, dadurch gekennzeichnet, dass der Behälter mit einem Edelgas wie Helium gefüllt ist.

7. Behälter nach einem der Ansprüche 1 bis 6, dadurch gekennzeichnet, dass die Seitenwände am Haltegitterümfang etwas im den Hohlraum vorstehende Ringe (62, 64, 66, 68, 70) aufweisen.

8. Behälter nach Anspruch 7, dadurch gekennzeichnet, dass der Durchmesser der Haltegitter und der Ringe mit zunehmendem Abstand vom Oberen Behälterende abnimmt.

9. Behälter nach Anspruch 8, dadurch gekennzeichnet, dass der Unterschied in Durchmesser zwischen benachbarten Haltegittern und Ringen etwa 0.6 cm beträgt und dass bei der vorgegebenen Temperatur der Durchmesser jedes Haltegitters um etwa 0.3 cm kleiner ist als der Durchmesser des entsprechenden Rings.

10. Behälter nach Anspruch 7, 8 oder 9, dadurch gekennzeichnet, dass die Ringe eine grösser Breite aufweisen als die entsprechenden Haltegitter und dass die Ringe und Haltegitter abgeschrägte Kanten (158, 160, 166) aufweisen.

**Revendications**

1. Récipient pour un stockage de longue durée de combustible nucléaire épuisé, comprenant un conteneur (40) ayant une cavité (52) à l'intérieur et comportant une partie supérieure, une partie inférieure délimitant un plancher (56) et des parois latérales (54) s'étendant entre les parties supérieure et inférieure, et une pluralité d'agencements (78, 80, 82, 84, 86) de grilles en forme de disques, ayant une périphérie (56) et des moyens (88, 162, 168, 170) pour monter de façon coaxiale lesdits agencements de grilles à l'intérieur de ladite cavité en des positions espacées les unes des autres, de façon que leurs périphéries soient adjacentes auxdites parois latérales, chaque agencement de grille comprenant une pluralité de plaques (92 à 118) raccordées les unes aux autres pour former une matrice (90) ayant des ouvertures rectangulaires, les ouvertures desdits agencements de grilles étant alignées pour constituer des logements de stockage, caractérisé par le fait qu'une pluralité d'éléments (124 à 154) formant blocs sont fixés à ladite matrice (90) de plaques pour former ladite périphérie, et adaptés pour s'étendre jusqu'à venir en contact sous pression avec lesdites parois latérales pendant le stockage du combustible nucléaire épuisé, de façon à faciliter le transfert de chaleur depuis lesdits agencements (78, 80, 82, 84, 86) de grille jusqu'auxdites parois latérales.

2. Récipient selon la revendication 1, caractérisé par le fait que lesdits agencements de grilles ont des trous alignés (162) à l'intérieur, que des jambages (88) s'étendent à travers lesdits trous et que, pour chaque agencement de grille, un anneau inférieur (168) est fixé au jambage situé sur un côté de l'agencement de grille, et un anneau supérieur (170) est fixé au jambage situé sur l'autre côté de l'agencement de grille, la distance entre lesdits anneaux supérieur et inférieur étant plus grande que l'épaisseur de la longueur desdits trous à travers ledit agencement de grille, de sorte que ledit agencement de grille est maintenu de façon à pouvoir coulisser entre lesdits anneaux supérieur et inférieur.

3. Récipient selon la revendication 2, caractérisé par le fait que des cellules (172) à quatre côtés, chaque côté ayant une feuille (182) en matériau de poison à neutrons fixée dessus, sont disposées dans lesdits logements de stockage, et que des moyens (184, 186, 188, 190) de conduction de chaleur sont fixés sur lesdites plaques pour positionner lesdites cellules dans lesdits logements de stockage.

4. Récipient selon la revendication 3, caractérisé par le fait que, pour chaque cellule, lesdits moyens de conduction de chaleur comprennent des cales (184, 186, 188, 190) disposés de façon adjacente à deux parois de la cellule, et espacés des parois de la cellule.

5. Récipient selon la revendication 4, caractérisé par le fait que lesdits coins sont espacés desdites parois de la cellule, de façon à constituer des intervalles compris entre 0,005 cm et 0,025 cm.

6. Récipient selon l'une quelconque des revendications 1 à 5, caractérisé par le fait que le récipient est noyé avec un gaz inerte, tel que l'hélium.

7. Récipient selon l'une quelconque des revendications 1 à 6, caractérisé par le fait que lesdites parois latérales ont des anneaux (62, 64, 66, 68, 70) faisant saillie dans ladite cavité, de façon adjacente à la périphérie des agencements de grilles 8. Récipient selon la revendication 7, caractérisé par le fait que les diamètres desdits agencements de grille et desdits anneaux décroissent en fonction de la distance depuis la partie supérieure dudit conteneur.

9. Récipient selon la revendication 8, caractérisé par le fait que la différence des diamètres des agencements de grilles adjacents et des anneaux est d'environ 0,6 cm, et que, à la température prédéterminée, le diamètre de chaque agencement de grille est inférieur d'environ 0,3 cm au diamètre de son anneau correspondant.

10. Récipient selon l'une quelconque des revendications 7, 8 ou 9, caractérisé par le fait que la largeur de chaque anneau est plus grande que l'épaisseur de l'agencement de grille correspondant, et que lesdits anneaux et lesdits agencements de grilles ont des bords (158, 160, 166) en biseau.

FIG. 4.

FIG. 3.

EP 0 186 487 B1

FIG. 5.

A

96
120
120
120

122
122
110

FIG. 7.

148
150
146
152
144
90
92
154
142
94
124
96
140
98
118
106
108
110
112
114
116
126
100
138
102
136
128
104
132
130
134

2

## FIG. 6.

*FIG. 8.*

*FIG. 9.*

FIG. 11.

FIG. 10.

FIG. 12.

FIG. 14.

FIG. 1.
(PRIOR ART)

FIG. 2.
(PRIOR ART)

EP 0 186 487 B1

FIG. 13.

FIG. 15.